# EUROPEAN PATENT APPLICATION

(11) **EP 2 107 201 A2**
(43) Date of publication of application: **07.10.2009**
(21) Application number: 09425128.7
(22) Date of filing: 03.04.2009
(51) Int. Cl.: E06B 3/10, E06B 3/263

(54) **Production process of an eco modular window**

(30) Priority: 04.04.2008 IT MN20080008
(71) Applicant: Eurofinestra S.r.l., 46034 Governolo di Roncoferraro (MN) (IT)
(72) Inventor: Toniato, Emanuele, 46034 Governolo di Roncoferraro (Mantova) (IT)
(74) Representative: Petazzi, Guido

(57) **Abstract**

The present invention relates to a production process for an eco modular window composed of a leaf and casing which essentially comprises two series of operations, in which a first series of operations serves for the preparation of three types of planks: a plank for the leaf, a plank for the upper and side jambs, and a plank for the bottom jamb, while a second series of operations serves for the subsequent machining of the planks to obtain the window.

The first series of operations allows the planks to be realised, each of which is essentially composed of a plurality of alternate layers of wood (2) and cork (3) in which the thickness of the individual layers, whether they are made of wood or cork, is determined according to the final size of the plank which one intends to obtain.

The second series of operations allows the window to be obtained by assembling the various, suitably shaped, planks together.

## Description

The present invention refers to a production process for an eco modular (French) window which allows thermal and acoustic performance to be increased considerably with respect to a traditional window.

As it is known, at present, a window is linked to the use of a material made of a single timber type (solid wood system) or of alternate layers (normally a maximum of three), in order to reduce internal tensioning (lamellar system), but it is always made of a single type of material. In the lamellar system in particular, the material positioned centrally is sometimes different solely for the purposes of lowering the cost as a less prestigious (and therefore lower cost) wood is used.

Recently, in the realisation of a window, attempts have been made to insert, inside the wooden plank, a layer of chemically and/or synthetically derived material, which alters and modifies the concept of a window realised with natural materials and does not offer improvements, rather, it tends to worsen the mechanical seal of the window, which is constituted of a plurality of planks which are suitably shaped and assembled together.

At present, for the construction of a window, planks have been realised with alternate wood and cork layers. The system for the realisation of these planks is illustrated in European patent n. 01830150.7.

The aforesaid system comprises the laying of a layer of wood on the lower platen of a press and a film of glue is spread over the upper surface of the layer of wood, onto which a layer of cork is placed. A film of glue is spread over the layer of cork, onto which a second layer of wood is placed. At this point, the upper platen of the press is placed on the surface of the second layer of wood and is heated to approx. 150° - 170° C, with the assembly kept under pressure for approx. five minutes to make the various layers of wood and cork stick together. In the patent it also says that there may also be two layers of cork placed inside. The construction system described in the aforesaid patent has brought various drawbacks to light.

A first drawback which has emerged derives from the fact that in the construction of the "sandwich", the scrap - i.e. the waste material created during the mechanical construction (with milling machines) of the plank to realize a window element - is not taken into account or calculated, with the consequence that a considerable wastage of raw materials is generated, as clearly shown in figure A.

A second drawback encountered by the construction system described in the patent is that the system allows a plank to be realised but does not take into account the fact that there is cork present, which is a material that is mechanically weak in points where certain levels of stress resistance and water tightness are required, therefore this specialist application, i.e. of the finished industrial product (the window) has not been taken into account. In fact, cork cannot be exposed to the external environment as it wears and deteriorates very quickly while the patent illustrates a detail of a cut-away view of a window in which the presence of cork is not protected with wood and is exposed to the environment and bad weather.

A further drawback encountered derives from the fact that the mechanical seal, in the "sandwich" plank as a whole, as shown in the patent, has limits which create drawbacks deriving from the methods by which the parts in question are glued together as the gluing is essential for the stability of the entire apparatus. In fact, the use of a press with a heated platen (150°C) for a rather short time does not allow the parts to be glued together correctly as they are joined solely on the surface since the glue does not have time to penetrate deeply. Furthermore, the mechanical seal proves unstable and at risk at the interlocking points (pins) and the points where the parts are joined as the cork has no mechanical resistance to withstand stress and the tensions exerted by the iron fittings present in a window.

Confirming the drawbacks illustrated and observed, still today certifying bodies do not issue documents guaranteeing compliance of casings produced with this system and they are not available on the market.

At present, there is a great need to realise windows which reduce thermal and acoustic transmission, with a view to making energy savings by containing energy consumption via both heating in the winter and air conditioning in the summer, and therefore the window manufacturing field is also researching solutions which could improve thermal and acoustic transmission characteristics.

The aim of the present invention is essentially to overcome the drawbacks of the commonly known technique by resolving the difficulties by means of a production process for an eco modular window able to increase, in a clear and variable manner, the thermal and acoustic performance of the window realised. A second aim of the present invention is to realise a production process for an eco modular window able to fulfil and satisfy the most disparate aesthetic requirements, within - naturally - the mechanical limits determined by the said materials.

A further aim of the present invention is to realise a production process for an eco modular window able to allow energy savings during both production and use.

A still further aim of the present invention is to realise a production process for an eco modular window which allows the use of natural materials.

A still further aim of the present invention is to realise a production process for an eco modular window which proves particularly flexible and allows the wastage of material (and therefore of trees) to be reduced considerably during the construction of the window.

A further but not last aim of the present invention is to realise a production process for an eco modular window which is simple to realise and works well.

These aims and others besides, which will better emerge over the course of the present description, are essentially achieved by means of a production process for an eco modular window, as outlined in the claims below.

Further characteristics and advantages will better emerge in the detailed description of a production process for an eco modular window according to the present invention, provided in the form of a non-limiting example, with reference to the accompanying drawings, in which:
- figure A shows, in a schematic view, the shape created from a plank;
- figure 1 shows, in a schematic view, the elements comprising a window;
- figures 2A, 2B and 2C show, respectively, a plank for the leaf, a plank for the head jamb and the side jambs and a plank for the bottom jamb obtained with the production process according to the present invention;
- figures 3A, 3B and 3C show, respectively a plank for the leaf, a plank for the head jamb and side jambs and a plank for the bottom jamb obtained with the production process according to the present invention but with a larger section;
- figures 4A and 4B each show a vertical section of planks shaped for a window with an aluminium drip moulding;
- figures 5A and 5B each show a vertical section of planks shaped for a window and with a wooden drip moulding;
- figure 6 shows a horizontal section of lateral planks shaped for a window;
- figure 7 shows a horizontal section of central planks shaped for a window;
- figure 8 shows a different horizontal section of lateral planks shaped for a window with a larger plank section;
- figure 9 shows a different horizontal section of central planks shaped for a window with a larger plank section;
- figures 10A and 10B each show a vertical section of planks with a different section shaped for a French window with an aluminium threshold;
- figures 11A and 11B each show a vertical section of planks with a different section shaped for French window with a draught excluder element;
- figures 12A and 12B each show a horizontal section of a window realised with the production process in question but with a different type of pane;
- figures 13A and 13B each show a vertical section of a window realised with the production process according to the present invention but with a different type of pane;
- figures 14A, 14B and 14C show, in a vertical section and in detail, respectively, the internal profile of a leaf, the external profile of the leaf and the internal profile of the casing of a window realised with the process in question;
- figures 15A and 15B each show a plank shaped with the production process;
- figures 16A and 16B each show a casing of a window obtained with the present production process.

Before describing the stages of the process in question, let's look at a brief introduction illustrating, summarily, the course of production of a window made of solid wood or lamellar wood. The realisation of a window starts by sourcing the materials required for the production. Basically, bonding sections (the aforesaid planks) are found on the market, together with suitable timbers for the realisation of the window you intend to produce.

The planks are brought to the machinery comprised of milling units and machined to generate an internal profile for the windows and the relative pin connections (joints); the elements thus obtained are assembled together in an mullion/transom fashion, or vice versa, thereby creating a part of the leaf. The elements are then brought to a machine known as a "clamp" to be assembled, pressed against each other, by means of glue. At this point the internal shaping of the leaf is realised.

The element obtained then passes once again through the milling units to outline the external shaping of the leaf.

The work then proceeds with the casing for the window, using the milling machines to mill the planks to realise the internal shaping of the casing. The loose planks and the leaves are then painted.

Once the paint is dry, the elements comprising the casing are assembled together, creating the external perimeter of the window, and then the leaves are joined to the casing and the iron fittings and seals are mounted.

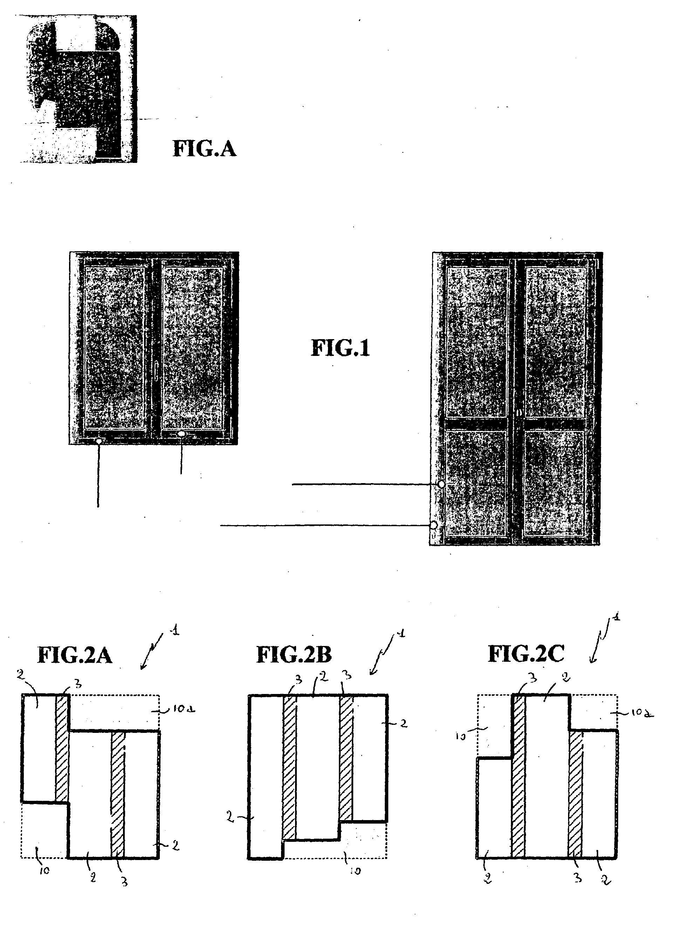

With reference to the said figures, in particular figures 2 and 3, 1 denotes (as a whole) a plank obtained with the production process for an eco modular window, according to the present invention.

To better understand the plank production process and, subsequently, that of the window, it is opportune to identify the parts comprising a window, which are: leaves and casing, which are shown in figure 1.

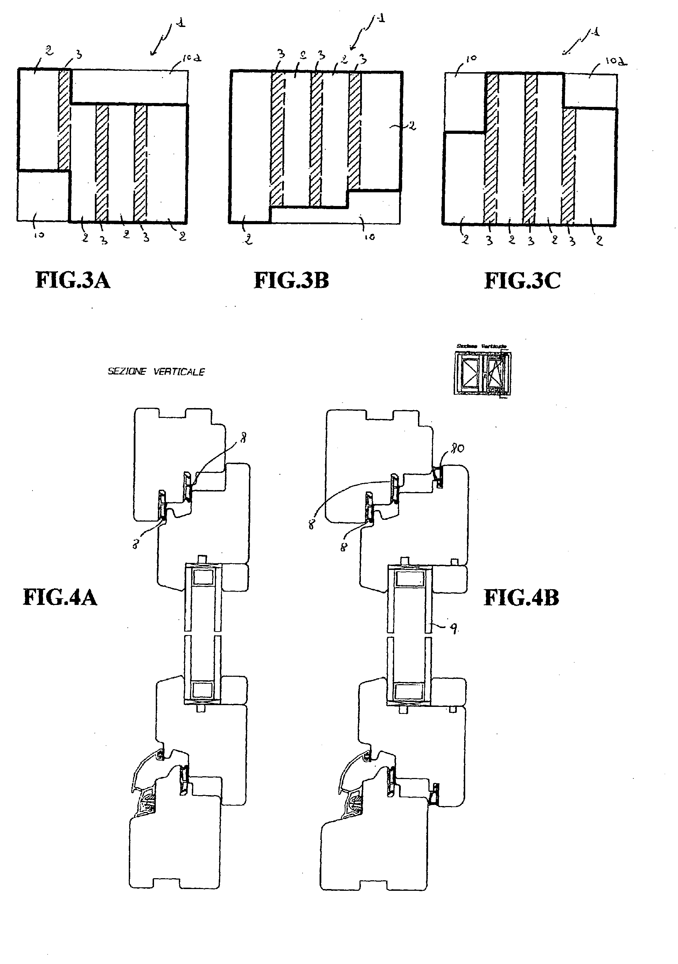

To realise the leaves and the casing three types of plank are necessary: a plank for the leaf, a plank for the head jamb and side jambs and a plank for the bottom jamb, as shown in figures 2A, 2B and 2C and in figures 3A, 3B and 3C. The different configurations of the planks mentioned earlier serve for the realisation of the elements for the leaves, elements for the side and head jambs and elements for the bottom jamb of the window.

According to the present invention, the production process 1 in question comprises two series of operations: one which concerns the preparation of the planks and the other, which concerns their subsequent machining to obtain the desired window.

For the preparation of the planks, it is necessary to carry out a plurality of preliminary operations. First of all, the materials (wood and cork) must be sourced with suitable sections (width, height and length) for the realisation of a finished element. In fact, the thicknesses of the components of each plank are studied and pre-determined to obtain finished products ranging from 58 to 92 mm, for the finished thickness of both the leaf and the casing.

The materials chosen to realise the planks are brought to the machining warehouse, where they are checked to ensure they meet the order specifications in terms of size and timber type and their humidity levels are checked.

The realisation of the plank, for the subsequent production of the window starts with the planarity check of the individual elements and their storage beside the press, divided into groups, for the realisation of the three types of plank necessary for the subsequent production of a window.

To avoid falling into possible errors, apart from the fact that the realisation of a window starts with the realisation of the leaves, the plank production process will start with the realisation of the planks for the leaves.

As can be seen in figures 2A and 3A, the plank 1 is essentially composed of a plurality of alternating layers of wood 2 and cork 3. The thickness of the individual layers both of wood and cork is established according to the final size of the plank one intends to obtain.

The first layer of which the plank is composed is a wooden layer and it is laid on the platen of a press with an off-set die 10 on one side whose task is to give the plank their final 'stepped' shaped.

A layer of glue (one-part vinyl glue with seal class D4 - the only product deemed suitable to give stability in the union of the parts and create less tension between them) is spread over the upper surface of the wood 2, onto which a first layer of semi-manufactured cork 3 with a suitably pre-determined high thickness density is placed. At this point, a second offset die 10a is positioned on a part of the upper surface of the cork layer while the remaining part has a second layer of one-part vinyl glue with seal class D4 placed on it, followed by a central wooden layer, a third layer of glue and a second layer of cork of the same thickness as the previous layer. Finally, a further layer of glue is spread and a final layer of wood applied. At this point, one proceeds, using the same method, to fill the entire press platen. Once the press platen is filled, a divider is placed on these materials, whereupon a further semi-manufactured layer is added. This stage is repeated for several platens depending on the number of planks to realise. The materials thus arranged are pressed for a time of 4 hours at room temperature, i.e. between 15°C and 30°C, this procedure will allow the glue to grip all the sides impregnated evenly and deeply, setting throughout all its parts, even its innermost ones, thereby creating a mechanically stable plank which will respond safely to the stress to which it will be exposed.

The sequence of operations illustrate earlier is carried out for all three types of planks shown in figures 2 and which are used for the realisation of the window to produce.

The stages described earlier are actuated in the process of realisation of the 5-layer plank (wood-cork-wood-cork-wood), shown in figures 2, which is used in the realisation of planks with window sections ranging from 58 mm to 68 mm. The same operative sequence is also applied to obtaining a 7-layer plank (wood-cork-wood-cork-wood-cork-wood), shown in figures 3, for a window section of 92 mm by simply adding a stage in which one extra layer of cork and one of wood are added.

At this point, the first series of operations in the production process is finished and the planks necessary for the subsequent series of operations for the construction of a window are ready.

In accordance with the present invention, the drawing of the shapes of the three types of plank has been obtained depending on the end shaping of the window, so that the milling machines subsequently used can be employed, removing as little material as possible in order to obtain the shape of the elements comprising a frame.

In fact, the shape obtained with particular "milling units" allows the realisation of elements which, regardless of the material used, i.e. wood+cork plank, lamellar plank, or a solid plank, have delivered high performance results in terms of resistance to wind, water, temperatures and acoustics.

On the plank obtained with the first series of operations of the present production process, the milling machines used allow less wood to be removed, which results in savings in material and positively affects the machinery, which is under less pressure, during the machining stage, due to the reduced removal of material and consequent greater energy savings. Furthermore, since less material is removed, there are less shavings and residue waste, which means less work for the disposal of the residue and also fewer trees cut down and less raw material is required. All these savings convert into an economic advantage, in addition to an important ecological advantage and a safeguard for the natural environment. In fact, the production process in question allows an average saving in materials of no less than 18% with respect to a standard window realised according to the commonly known technique.

As mentioned earlier, the thicknesses of the planks have been studied for the realisation of windows with a finished section ranging from 58 to 92 mm.

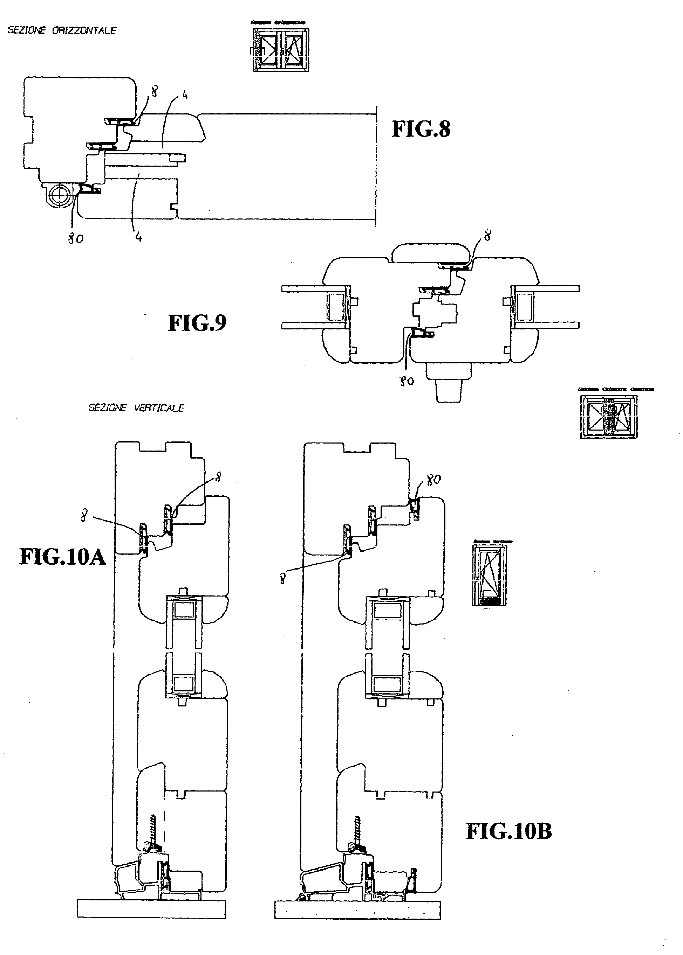

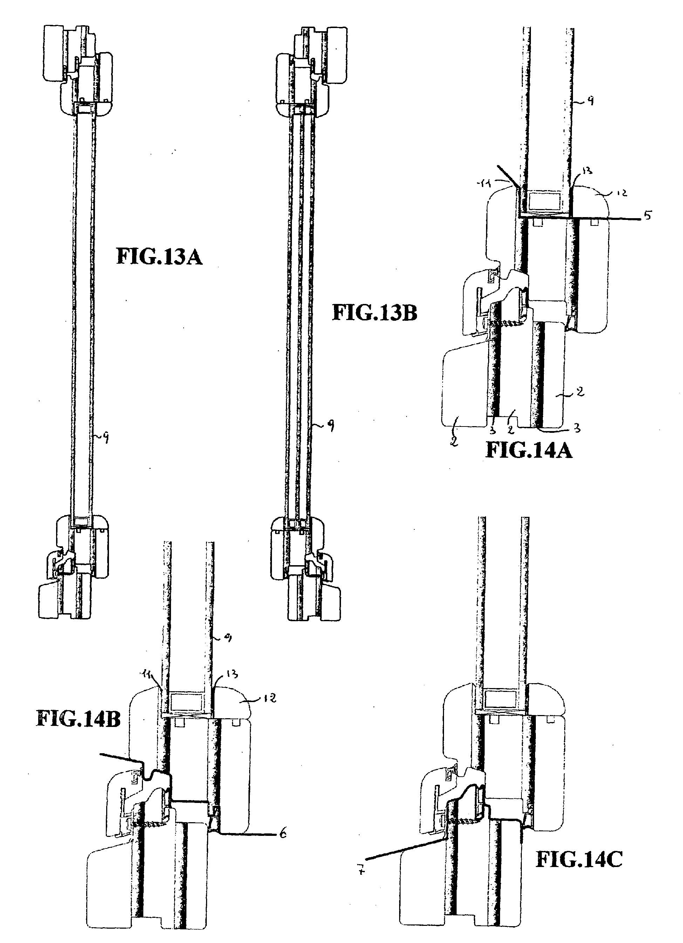

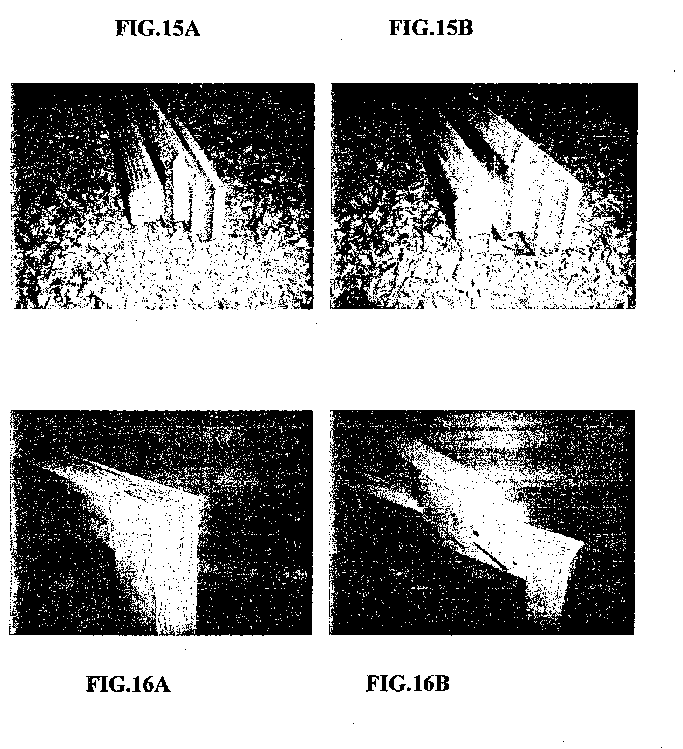

The "raw" planks are placed in the milling machine for the realisation of the planks for leaves for French windows and normal windows. Using milling machines and blade cutters, a first tool realises the shaping of the internal profile 5 of the leaf of the window, shown in detail in figure 14A, by realising the pin connections to size with the pins 4, shown in figure 8, which are envisaged to be inserted in corresponding seats present in the plank for the mullion which will then be joined, creating a joint between the two planks shown in figure 16A.

In particular, the machining stage of the process which envisages the milling of the plank allows planks to be realised which maintain the mechanical performance of the joints (interlocks) which will then be realised.

The shaped elements are taken to a machine known as a clamp, in which, by means of a uniform spreading of one-part vinyl glue D4 over pin 4, the elements constituting the leaf of the window are assembled: in fact, the mullions and transoms are joined and vice versa. The elements (pairs) are thus clamped to outline the four sides of the leaf (the milling was realised solely on the internal side of the leaf of the window). The leaf thus obtained passes once again through the "milling unit" to determine, this time, the shaping of the external profile 6 of the leaf of the window shown in figure 14B.

As mentioned earlier, the planks which are shaped according to the present process allow minimal removal of material since they have been studied specifically for leaves and also for the parts of the frame.

After the external squaring of the leaf of the window, one proceeds with the realisation of the casing of the window and/or French window.

The process of realisation of the planks for the casing, i.e. the head, side, and bottom jambs (not for French windows), is identical to that described for the realisation of the plank for the leaf.

The shaping of the internal profile 7 of the casing is realised by the "milling unit", as shown in figure 14C, then the planks are cut to size and machined further for the realisation of the pins, similar to those realised on the leaf, on a machine known as a "tenoning machine".

At this point, all the parts of the window have been determined: leaves and casing.

The elements realised are impregnated individually with water-soluble products or with natural impregnating products, according to the well defined processes of the commonly known technique.

In greater detail, the impregnation with water-soluble products occurs with a first coat of water-soluble, water-based product, followed by the necessary drying time. Then a second coating, in which a layer of water-based undercoat is applied and left to dry; the window is subsequently sandpapered and, last of all, a third coat is applied, which is the finishing coat and consists of a water-based paint which is left to dry for a suitable time.

Likewise, the impregnation with natural products occurs with a first coating with a compound of boron salts and natural earth, and then, subsequently, one proceeds by smoothing the window, followed by a second and third coat and one or more coats of finishing wax.

The elements constituting the casing, once dry, are fastened together either with glue (D4) or in a mechanical fashion using screws.

The iron fittings are then inserted in the specific seats and the seals fitted into the specific channels and finally, the leaves are joined to the casing via operations of a commonly known type.

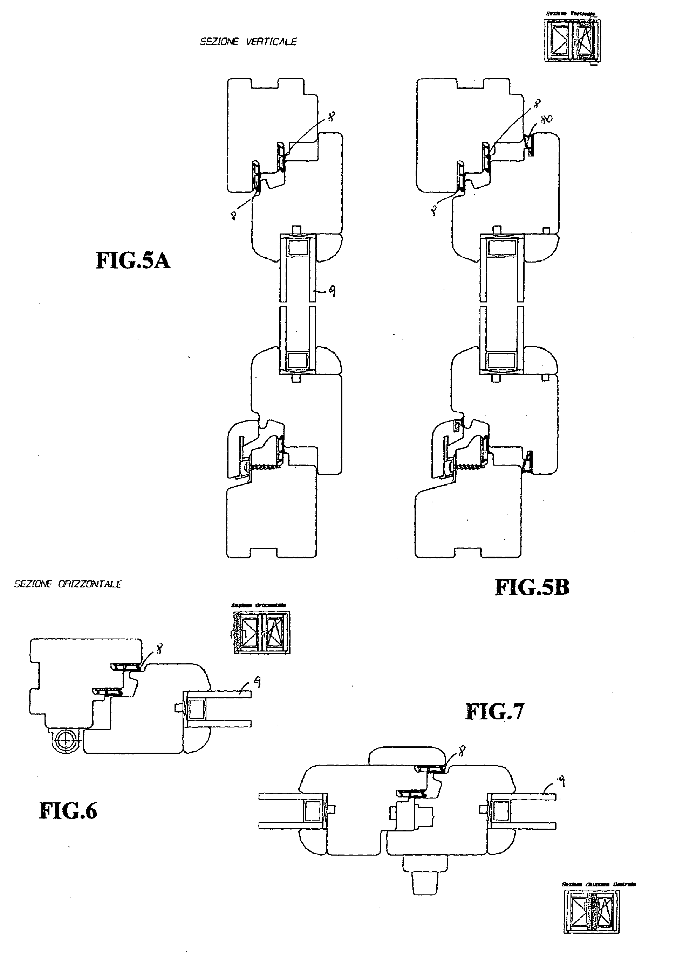

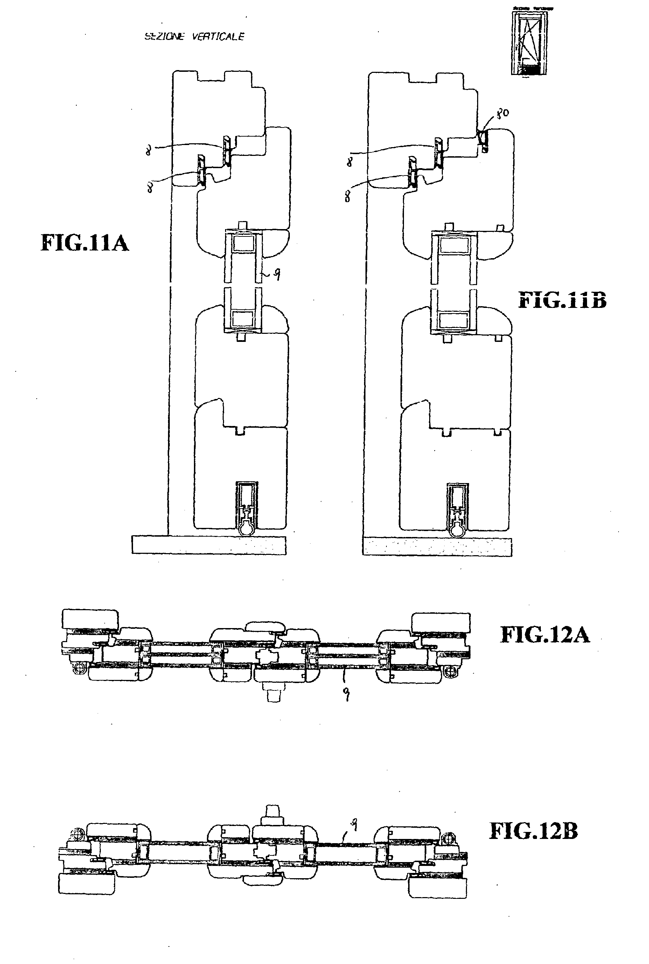

In particular, in the process in question, because of the particular shaping of the external profile of the leaf and internal profile of the casing, the positioning of the seals 8 is different from that in windows according to the commonly known technique. This positioning, shown in figures 4A, 4B, 5A, 5B, 6, 7, 8, 9, 10A, 10B, 11A and 11B, allows the leaf to be insulated acoustically and thermally in relation to the casing so that, when they are flush, there is essentially no contact between the wooden parts but solely between the seal and the wood. Furthermore, the seal 8 used features an annular configuration which allows suitable insulation to prevent blows and deaden the vibrations which are generated between the casing and leaf also creating a notable seal against the passing of air, wind, and water, in addition to noise. In the planks with a larger section, in particular, there is a third seal 80 located on the leaf, which increases the acoustic seal further.

Subsequently, a double glazed pane 9 is added which, once in place, is suitably shimmed and sealed.

In addition to everything illustrated above, the series of operations for the realisation of the wood+cork plank can also be applied to realise lamellar planks of a commonly known type, thus allowing a saving in material also in the construction of conventional windows, while it is not applicable to windows constructed with solid planks.

As shown, for example, in figure 14A, the shape realised with the milling machine concerning the shaping of the internal profile 5 of the leaf allows the pane 9 to rest on a first segment 11 of cork which allows, from an acoustic point of view, a considerable seal against noise and, similarly, the mobile pane holder 12 rests against a second segment of cork 13 which, in its turn, is touching the pane 9, therefore excellent noise insulation is created also on the inside of the window.

Furthermore, the presence of the segments of cork 11 and 13 which are placed at the sides of the pane allow an improvement also in the seal against the transmission of heat along lateral edges of the glass at the points where the pane holder 12 is present.

Thus the present invention achieves the aims set.

The production process for an eco modular window in question allows the realisation of first the plank and then the window, which features, in a clear and substantial fashion, excellent thermal and acoustic performance.

Furthermore, the production process allows the most disparate aesthetic requirements to be fulfilled and satisfied, naturally within the mechanical limits determined by the materials employed.

Advantageously, the production process allows energy savings and savings in terms of the trees used, and employs natural materials only, unlike as occurs with synthetic or chemical materials according to the commonly known technique.

In particular, the production process according to the present invention proves particularly flexible and allows the waste of materials during the window construction stage to be reduced considerably.

In addition to everything illustrated so far, the production process of the plank has allowed the thermal and acoustic performance to be increased, without invalidating the window's mechanical and aesthetic performance. Corroborating the previous statement, the following improvement percentages have been observed with respect to a standard window (made of lamellar wood or solid wood), as far as the window's thermal performance is concerned and also in the case of French windows made of wood+cork, and lamellar wood with respect to those produced at present:
Uf of standard window =1.80 W/mqK;
Uf of lamellar window = 15% improvement with respect to the standard;
Uf of window in wood+cork = 37% improvement with respect to the standard; where Uf stands for the thermal transmittance of the casing and the leaf without the pane.

In particular, the production process in question, as already mentioned, uses natural materials, allows the manufacturer to offer avant-garde solutions to problems concerning savings in energy and materials both in the production of the plank constituting the base of the window and during window use.

Furthermore, the particular shaping with which the planks are milled has allowed a product to be realised which is geometrically suitable for the realisation of a high-performance window as the combination of the shaped wood+cork plank and the milling contours has allowed a product to be obtained which is suitable for the realisation of a window, in all its parts, also from a mechanical point of view, unlike those presently produced according to the commonly known technique. In fact, the plank features a good static seal between the parts comprising it, created by its gluing under pressure, at room temperature, for approx. four hours using one-part vinyl glue.

The realisation of a plank and of the window have provided a solution to a major problem concerning thermal and acoustic bridges relating to the pane/leaf contact area: i.e. the realisation of a shaped pane holder on the leaves, which is fitted externally and removable internally, with the layer of cork which is suitably positioned and scaled so as not to diminish the aesthetic nature of the window: this solution has allowed high-performance results to be obtained.

The production process according to the present invention allows notable savings in both energy and raw material; an average saving in raw material has been calculated at 18% of the total product, with respect to an industrially manufactured window realised according to the methods of the commonly known technique. The data stated refers to the savings in raw materials, but the related industrial activities and the window realised lead us to add that energy saving percentages are improved along the entire production chain, from cutting down the trees to the end use of the product in any building. In fact, the production process in question, furthermore, renders the window produced ecological: everything utilised in its production is, in fact, recoverable and/or recyclable.

A further, but not final, advantage of the present invention is that the production process proves simple to realise and works well.

Naturally, further modifications or variants may be applied to the present invention while remaining within the scope of the invention that characterises it.

## Claims

1. A production process for an eco modular window of the type comprising a leaf and a casing **characterised by** the fact that the said process is essentially constituted of at least two series of operations:
- a first series for the preparation of three types of planks, which are: a plank for the leaf, a plank for the head and side jamb and a plank for the bottom jamb plank, and
- a second series for the subsequent machining of the planks to obtain the desired window.

2. A production process for an eco modular window according to claim 1, **characterised by** the fact that for the preparation of the planks, it is necessary to carry out a plurality of preliminary operations, as follows:
- source the materials (wood and cork) with suitable sections (width, height and length) for the realisation of a finished element,
- take the chosen materials to a machining warehouse and check that they meet the order specifications in terms of size and timber type and humidity levels,
- check the planarity of the individual elements of material,
- stock the elements beside a press, dividing them into groups, for the realisation of the three types of plank necessary for the subsequent production of the window.

3. A production process for an eco modular window according to claim 1, **characterised by** the fact that for the preparation of the planks, each of which is essentially composed of a plurality of alternate layers of wood (2) and cork (3) in which the thickness of the individual layers, of both wood and cork, is established according to the final size of the plank one intends to obtain, it is necessary to proceed as follows:
- rest a first layer of wood of which the plank is composed on the platen of a press with, next to it, an offset die (10) which has the function of providing the plank's final "stepped" shape,
- spread a layer of one-part vinyl glue (seal class D4) over the upper surface of the wood (2),
- place a first layer of semi-manufactured cork (3) with a predetermined suitably high-density thickness on top of the layer of glue,
- position a second offset die (10a) on part of the upper surface of the layer of cork,
- spread a second layer of one-part vinyl glue (seal class D4) over the remaining part of the layer of cork,
- place a central layer of wood in position, apply a third layer of glue to it and a second layer of cork of the same thickness as the previous layer,
- apply a further layer of glue and a final layer of wood,
- press the materials thus arranged for a time of approx. four hours at room temperature, i.e. between 15°C and 30°C, so that the glue grips uniformly and deeply over all the impregnated surfaces, drying throughout the plank's parts, even the innermost ones.

4. A production process for an eco modular window according to claim 3, **characterised by** the fact that for the preparation of the planks one proceeds, as for the individual plank, by filling the entire press platen and, once the filling of the press platen is complete, placing a divider on the said materials and then arranging a further semi-manufactured layer over several platens, depending on the number of planks to realise.

5. A production process for an eco modular window according to claim 3, **characterised by** the fact that, for the preparation of the planks, the sequence of operations is carried out for all three types of planks which serve for the realisation of the window.

6. A production process for an eco modular window according to claim 3, **characterised by** the fact that for the preparation of the planks when one wishes to obtain a 7-layer plank, one must carry out a stage in which a further layer of cork and a further layer of wood are added.

7. A production process for an eco modular window according to claim 1, **characterised by** the fact that for the subsequent machining of the planks to obtain the window, it is necessary to proceed as follows:
- place each leaf plank for realising the shaping of the internal profile of the leaf in a milling machine in which a first tool, by removing a minimum quantity of material, realises the shaping of the internal profile (5) of the leaf of the window, also realising the pin connections to size, with the pins (4) envisaged to fit into the corresponding seats featured on a mullion plank which will be joined with it, creating a joint between the two planks,
- take the shaped elements to the machine known as a clamp, into which, by uniformly spreading the one-part vinyl glue (type D4) over the pins 4, the elements constituting the leaf of the window are assembled by joining the mullions and transoms and vice versa,
- tighten the elements (pairs) until the four sides of the leaf are outlined (the milling has only been realised on the inside of the leaf of the window),
- switch the newly obtained leaf over to the "milling unit" to create the shaping of the external profile (6) of the leaf of the window, removing a minimum quantity of material,
- proceed with the realisation of the casing of the window in which the realisation of the planks of the casing (upper, side, and lower jambs for windows) is identical to that of the realisation of the plank for the leaf,
- realise, using the "milling unit" the shaping of the internal profile (7) of the casing,
- mill the planks to size and machine them further for the realisation of the pins, similar to those realised in the leaf, by means of a machine known as a tenoning machine.

8. A production process for an eco modular window according to claim 7, **characterised by** the fact that for the machining of the planks to obtain the window, it is necessary to impregnate the elements individually with water-soluble products or with natural impregnating products and, once dry, to fasten them together either with glue or in a mechanical fashion, with screws, and then insert the iron fittings into their seats and insert the seals into the specific channels and, last of all, join the leaves to the casing and fit the pane.

9. A production process for an eco modular window according to claim 7, **characterised by** the fact that, depending on the particular shaping of the external profile of the leaf and the internal shaping of the casing, the ensuing positioning of the seals (8) allows the leaf to be insulated acoustically and thermally in relation to the casing so that there is essentially no contact between the wooden parts, solely between the seal and wood, when they touch, permitting suitable insulation to prevent blows and deaden the vibrations generated between the casing and the leaf, creating a notable seal against air, wind, water and noise.

10. A production process for an eco modular window according to claim 7, **characterised by** the fact that, depending on the particular shaping of the external profile of the leaf and the internal profile of the frame, thanks to the planks with larger sections, there is a third seal (80) present on the leaf, thereby further increasing the acoustic seal.

11. A production process for an eco modular window according to claim 7, **characterised by** the fact that, depending on the particular shaping of the internal profile (5) of the leaf, the pane (9) is resting, on one side, on a first segment (11) of cork and, on the other side, on a second segment (13) of cork, therefore, from an acoustic point of view, there is a considerable seal against noise and, similarly, the mobile pane holder (12) is resting against the second segment of cork (13) which, in its turn, is touching the pane (9), therefore, excellent insulation is created against noise transmission also on the internal side of the window, improving also the seal against heat transmission along the side edges of the pane at the points at which the pane holder (12) is present.

12. A production process for an eco modular window according to claim 1, **characterised by** the fact both the first and the second series of operations for the machining of the planks made of wood+cork can also be applied to realise lamellar planks.
